# EUROPÄISCHE PATENTSCHRIFT

(11) **EP 3 915 158 B1**
(45) Veröffentlichungstag und Bekanntmachung des Hinweises auf die Patenterteilung: **02.08.2023**
(21) Anmeldenummer: 20701278.2
(22) Anmeldetag: 16.01.2020
(51) Int. Cl.: H01M 50/249

(54) **VERFAHREN UND SYSTEM ZUM HERSTELLEN EINER THERMISCHEN SCHNITTSTELLE IN EINER BATTERIE FÜR EIN KRAFTFAHRZEUG**
METHOD AND SYSTEM FOR PRODUCING A THERMAL INTERFACE IN A BATTERY FOR A MOTOR VEHICLE
PROCÉDÉ ET SYSTÈME POUR LA FABRICATION D'UNE INTERFACE THERMIQUE DANS UNE BATTERIE POUR UN VÉHICULE AUTOMOBILE

(30) Priorität: 21.01.2019 DE 102019101403
(43) Veröffentlichungstag der Anmeldung: 01.12.2021
(73) Patentinhaber: Lisa Dräxlmaier GmbH, 84137 Vilsbiburg (DE)
(72) Erfinder: RÖMELSBERGER, Michael, 84323 Massing (DE); SEIDL, Stefan, 84028 Landshut (DE); MAGUNIA, Robert, 84144 Geisenhausen (DE); RIESTER, Christoph, 85445 Obererding (DE); UNVERRICHT, Michel, 84034 Landshut (DE)
(86) Internationale Anmeldenummer: PCT/EP2020/051000
(87) Internationale Veröffentlichungsnummer: WO 2020/152020

(56) Entgegenhaltungen:
- DE-A1-102011 076 578
- DE-A1-102018 005 234

## Beschreibung

### Technisches Gebiet

Die vorliegende Erfindung betrifft ein Verfahren und ein System zum Herstellen einer thermischen Schnittstelle in einer Batterie für ein Kraftfahrzeug.

### Stand der Technik

In Batteriesystemen von Kraftfahrzeugen werden üblicherweise sogenannte thermische Interface-Materialien bzw. Gapfiller, ganz allgemein also Wärmeleitmaterialen, zur Wärmeabfuhr und zum Toleranzausgleich bei vorhandenen Spalten verwendet. Um den Wärmeübergang bei sämtlichen Toleranzlagen sicherzustellen, erfolgt die Dosierung solcher Wärmeleitmaterialen in der Regel auf das maximal mögliche Spaltmaß und damit meistens auf einen relativ hohen Überfüllgrad bezüglich einer Nominal- und vor allem einer Minimaltoleranz.

Üblicherweise umfassen Batterien für Kraftfahrzeuge mehrere Batteriemodule, in denen oftmals mehrere Batteriezellen zusammengefasst sind. Derartige Batteriemodule werden von Aufnahmestrukturen, beispielsweise in Form von Batterierahmen oder dergleichen aufgenommen. Solche Aufnahmestrukturen können Wärmeübertragungsflächen, beispielsweise in Form von Schottplatten als Zwischenschicht, Kühlplatten, anderweitige Kühlstrukturen oder ganz allgemein Wärmesenken, aufweisen, über welche überschüssige Wärme von den Batteriezellen und somit von den Batteriemodulen zu einem Kühlsystem der Batterie abgeführt werden soll. Aufgrund von Fertigungstoleranzen ergeben sich bei Batterien beispielsweise unterschiedliche Formen und Lagen von Schottplatten, Batterierahmen, Unterseiten von Batteriemodulen und unterschiedliche Positionen von Anbindungspunkten an Batterierahmen und Batteriemodulen.

Dadurch, dass oftmals ein gewisser Überfüllgrad an Wärmeleitmaterial, also in Form von thermischem Interface-Material oder Gapfiller, in Kauf genommen wird, können teilweise sehr hohe Kräfte beim Montieren, vor allem beim Setzen, der Batteriemodule auftreten, wenn diese das bereits aufgetragene Wärmeleitmaterial (thermische Interface-Material oder Gapfiller) verpressen und verdrängen. Zudem kann es auch passieren, dass sehr lange Prozesszeiten in Kauf genommen werden müssen, da das Verpressen des bereits aufgetragenen Wärmeleitmaterials nur sehr langsam möglich ist, um die dabei auftretenden Kräfte gering zu halten und die Strukturen, insbesondere die betreffenden Batteriemodule und Aufnahmestrukturen für Batteriemodule, nicht zu beschädigen. Bei einer zu geringen Befüllung mit Wärmeleitmaterial, also wenn der zu befüllende Spalt nicht ausreichend mit dem Wärmeleitmaterial ausgefüllt wurde, bestünde das Risiko einer sehr schlechten thermischen Performance des zugehörigen Kühlsystems. Eine Unterdosierung mit Wärmeleitmaterial ist also ebenfalls unvorteilhaft.

Weiterhin ist die Überfüllung mit Wärmeleitmaterial mit einem hohen Materialeinsatz und damit hohen Kosten verbunden. Außerdem stellt dies auch eine Ressourcenverschwendung dar und führt so zu einer schlechten Umweltbilanz. Zudem weisen üblicherweise eingesetzte Wärmeleitmaterialien eine Dichte von zumeist mehr als 2 g/cm³ auf, haben also ein relativ hohes Gewicht, welches das betreffende Kraftfahrzeug über seine Lebensdauer mittragen muss, was sich entsprechend negativ auf die Energiebilanz des Kraftfahrzeugs auswirkt.

Die DE 10 2018 005 234 A1 offenbart ein Verfahren zum Herstellen einer Batterie. Die Batterie umfasst mehrere Batteriezellen. Auf die Batteriezellen wird eine Wärmeleitpaste aufgebracht. Die aufzutragende Menge der Wärmeleitpaste ist abhängig von einer erfassten Höhe jeweiliger Batteriezellen.

Die DE 10 2011 076 578 A1 offenbart ein Energiespeichermodul mit mehreren prismatischen Speicherzellen, welche in einer Reihe gestapelt sind. Die prismatischen Speicherzellen sind zwischen zwei Endplatten angeordnet und über gegenüberliegende Zuganker verspannt.

### Beschreibung der Erfindung

Es ist daher die Aufgabe der vorliegenden Erfindung, eine Lösung bereitzustellen, mittels welcher wenigstens eine thermische Schnittstelle in einer Batterie für ein Kraftfahrzeug möglichst effektiv hergestellt werden kann.

Diese Aufgabe wird durch ein Verfahren sowie durch ein System zum Herstellen einer thermischen Schnittstelle in einer Batterie für ein Kraftfahrzeug mit den Merkmalen der unabhängigen Patentansprüche gelöst. Vorteilhafte Ausgestaltungen mit zweckmäßigen und nicht trivialen Weiterbildungen der Erfindung sind in den abhängigen Ansprüchen angegeben.

Bei dem erfindungsgemäßen Verfahren zum Herstellen einer thermischen Schnittstelle in einer Batterie für ein Kraftfahrzeug werden wenigstens ein Batteriemodul und wenigstens eine Aufnahmestruktur mit einem eine Wärmeübertragungsfläche aufweisenden Aufnahmebereich zum Aufnehmen einer Seite des Batteriemoduls in einer bestimmungsgemäßen Einbaulage bereitgestellt. Das Batteriemodul kann beispielsweise mehrere miteinander verschaltete Batteriezellen aufweisen, welche in einem Gehäuse des Batteriemoduls angeordnet sind. Bei der Aufnahmestruktur kann es sich beispielsweise um einen Batterierahmen oder auch um anderweitige Aufnahmestrukturen handeln. Zur Aufnahmestruktur gehört die besagte Wärmeübertragungsfläche, bei welcher es sich beispielsweise um eine Schottplatte handeln kann. Im Fall einer Schottplatte handelt es sich üblicherweise um eine Zwischenschicht zwischen Batteriemodul und Kühlsystem, diese dient u.a. also zur Übertragung von Wärme vom Batteriemodul zum Kühlsystem. Bei der Wärmeübertragungsfläche kann es sich auch direkt um eine Kühlplatte, eine anderweitige Kühlstruktur oder ganz allgemein um eine Wärmesenke handeln. In der bestimmungsgemäßen Einbaulage dient die Wärmeübertragungsfläche also zur Wärmeübertragung vom Batteriemodul zu einem Kühlsystem der Batterie.

Das Kühlsystem der Batterie kann aktiv oder passiv ausgebildet sein, d.h. eine aktive Kühlung oder eine passive Kühlung bereitstellen.

Bei dem erfindungsgemäßen Verfahren wird der Aufnahmebereich und/oder die Seite des Batteriemoduls, welche vom Aufnahmebereich der Aufnahmestruktur aufgenommen werden kann, mittels einer Messvorrichtung vermessen. Eine Größe und Form eines Spalts wird ermittelt, welcher sich in der bestimmungsgemäßen Einbaulage des Batteriemoduls zwischen der Wärmeübertragungsfläche und der aufzunehmenden Seite des Batteriemoduls ergibt, wobei diese Ermittlung mittels einer Datenverarbeitungseinrichtung auf Basis der zuvor vorgenommenen Vermessung durchgeführt wird. Danach wird eine Dosiervorgabe für ein Wärmeleitmaterial, also für ein thermisches Interface-Material bzw. für einen Gapfiller, zum Ausfüllen des Spalts auf Basis der ermittelten Größe und Form des Spalts mittels der Datenverarbeitungseinrichtung ermittelt. Danach wird das Wärmeleitmaterial auf der Wärmeübertragungsfläche und/oder der aufzunehmenden Seite des Batteriemoduls entsprechend der ermittelten Dosiervorgabe mittels einer Dosiervorrichtung aufgebracht. Danach wird das Batteriemodul in der bestimmungsgemäßen Einbaulage unter Verpressen des aufgebrachten Wärmeleitmaterials mittels einer Montagevorrichtung montiert, wonach das verpresste Wärmeleitmaterial die thermische Schnittstelle zwischen der Seite des Batteriemoduls und der Wärmeübertragungsfläche bildet.

Bei dem erfindungsgemäßen Verfahren zum Herstellen der besagten thermischen Schnittstelle wird also ein Auftragskonzept bezüglich des Wärmeleitmaterials so konzipiert, dass durch die erfindungsgemäße Prozesskette Unsicherheiten bzw. Toleranzen exakt erfasst, verarbeitet und analysiert werden, sodass eine toleranzbedingte Überfüllung mittels des Wärmeleitmaterials entfallen kann. Es erfolgt also eine toleranzgesteuerte Dosierung hinsichtlich des Wärmeleitmaterials, sodass der Materialeinsatz des als Gapfillers bzw. als thermisches Interface-Material dienenden Wärmeleitmaterials an die tatsächliche Spaltgeometrie und somit an die tatsächlich notwendige Menge angepasst wird. Dies kann erfolgen, indem der Aufnahmebereich und/oder die aufzunehmende Seite des Batteriemoduls mittels der Messvorrichtung vermessen wird, wobei basierend darauf Rückschlüsse auf die Größe und Form des Spalts gezogen werden, welcher sich in der bestimmungsgemäßen Einbaulage des Batteriemoduls zwischen der Wärmeübertragungsfläche und der aufzunehmenden Seite des Batteriemoduls ergibt.

Sowohl das Batteriemodul als auch die Aufnahmestruktur weisen Fertigungstoleranzen auf, was sich insbesondere bei großen Baugruppen und Schweißkonstruktionen erheblich auswirken kann. Innerhalb der vorgegebenen Toleranzbereiche können bei den Batteriemodulen und auch bei der Aufnahmestruktur zum Beispiel Formabweichungen in Form von Welligkeiten oder Vorwölbungen auftreten. Des Weiteren können bestimmte Lagen von Befestigungspunkten bzw. Befestigungsstellen variieren. All diese Abweichungen müssen mit dem Wärmeleitmaterial ausgeglichen werden. Um die eingangs genannten Nachteile durch generelle Überfüllung oder einen ungleichmäßigen oder auch unzureichenden Benetzungsgrad zu vermeiden, wird also das Wärmeleitmaterial gezielt in passender Menge lokal an entsprechenden Stellen dosiert.

Mittels des Verfahrens können dadurch sehr geringe Schichtdicken beim Wärmeleitmaterial realisiert werden. In Folge dessen ergeben sich relativ geringe Verpresskräfte ohne eine Überfüllung des besagten Spalts zwischen der Wärmeübertragungsfläche der Aufnahmestruktur und der Seite des Batteriemoduls, welche von der Aufnahmestruktur aufgenommen wird. Die erforderlichen Schichtdicken bezüglich des Wärmeleitmaterials hängen so fast nur noch von den Toleranzen selbst bezüglich des Batteriemoduls und der Aufnahmestruktur ab und nicht mehr von zusätzlichen prozesstechnischen Einflüssen, wie beispielsweise ansonsten auftretende hohe Kräfte beim Verpressen des aufgebrachten Wärmeleitmaterials, in Folge dessen sich die Aufnahmestruktur und/oder das Batteriemodul an gewissen Stellen durchbiegen können.

Mittels des Verfahrens ist es auch möglich, einen Benetzungsgrad hinsichtlich des Wärmeleitmaterials prozesssicher einzustellen und so möglichst ideale thermische Eigenschaften bezüglich des Wärmeleitmaterials zu realisieren. Zum Beispiel kann mittels des erfindungsgemäßen Verfahrens ein konstanter thermischer Widerstand durch einen entsprechenden Benetzungsgrad mittels des Wärmeleitmaterials angepasst an eine lokale Schichtdicke erzielt werden. Der Benetzungsgrad kann beispielsweise eine prozentuale Abdeckung einer definierten Oberfläche mit Wärmeleitmaterial beschreiben.

Basierend auf der Vermessung des Aufnahmebereichs und/oder der Seite des Batteriemoduls, welche mittels des Aufnahmebereichs aufzunehmen ist, kann eine Art allgemeine Toleranzlage ermittelt werden. Insbesondere können auch lokale und globale Unterschiede erfasst werden. Darüber hinaus ist es auch möglich, Ausgleichsfunktionen für überbestimmte Anbindungs- bzw. Auflagepunkte zu berücksichtigen, sodass in Abhängigkeit von den genannten Parametern ein notwendiges Dosiervolumen bezüglich des Wärmeleitmaterials festgelegt werden kann.

Mittels des Verfahrens ist es also möglich, die Dosiermenge des Wärmeleitmaterials exakt an die tatsächliche Größe und Form des Spalts anzupassen, welcher sich in der bestimmungsgemäßen Einbaulage des Batteriemoduls zwischen der Wärmeübertragungsfläche und der aufzunehmenden Seite des Batteriemoduls ergibt. Dabei kann nicht nur die Gesamtmenge an Wärmeleitmaterial exakt angepasst werden. Darüber hinaus ist es basierend auf der Vermessung möglich, ganz gezielt lokal die Form und Größe des betreffenden Spalts zu ermitteln und das einzubringende Wärmeleitmaterial genau daran anzupassen. Das üblicherweise relativ teure Wärmeleitmaterial wird also mittels des erfindungsgemäßen Verfahrens nicht verschwendet. Dadurch ergibt sich auch eine entsprechende Umwelt- und Ressourcenschonung.

Dadurch, dass keine Überfüllung mehr hinsichtlich des Wärmeleitmaterials beim erfindungsgemäßen Verfahren stattfinden muss, kann auch entsprechendes Gewicht bei der betreffenden Batterie eingespart werden. Darüber hinaus können aus den oben genannten Gründen auch besonders gute thermische Eigenschaften an der thermischen Schnittstelle realisiert werden. Darüber hinaus ergeben sich besonders geringe Kräfte beim Montieren des Batteriemoduls, mittels welchem das aufgebrachte Wärmeleitmaterial verpresst wird. Die verwendete Montagevorrichtung zum Montieren des Batteriemoduls kann also entsprechend kleiner dimensioniert werden, was einen geringeren Anlageninvest mit sich bringt. Auch die Strukturbelastung in der Aufnahmestruktur und im Batteriemodul kann entsprechend verringert werden. Darüber hinaus ist es mittels des erfindungsgemäßen Verfahrens möglich, besonders kurze Prozesszeiten beim Setzen des Batteriemoduls bzw. beim Verpressen des Wärmeleitmaterials zu erzielen.

Eine weitere mögliche Ausführungsform der Erfindung sieht vor, dass bei der Vermessung zumindest eine der folgenden Größen erfasst wird:
- Form der Wärmeübertragungsfläche, insbesondere Welligkeiten und/oder Vorwölbungen;
- Form der Seite des Batteriemoduls, insbesondere Welligkeiten und/oder Vorwölbungen;
- Lage von Befestigungspunkten des Aufnahmebereichs;
- Lage von Befestigungspunkten an der Seite des Batteriemoduls.

Durch die Vermessung der Form der Wärmeübertragungsfläche und/oder des Batteriemoduls ist es auf besonders exakte Weise möglich, die Größe und Form des Spalts zu ermitteln, welcher sich in der bestimmungsgemäßen Einbaulage des Batteriemoduls zwischen der Wärmeübertragungsfläche und der aufzunehmenden Seite des Batteriemoduls ergibt. Insbesondere durch die Vermessung bzw. Erfassung von Welligkeiten und/oder Vorwölbungen ist es möglich, die sich später einstellende Spaltform besonders exakt vorherzusagen. Die Berücksichtigung von Befestigungspunkten am Aufnahmebereich und/oder der aufzunehmenden Seite des Batteriemoduls bringt ebenfalls wertvolle Informationen mit sich, um eine möglichst exakte Dosiervorgabe für das Wärmeleitmaterial einstellen zu können. Grundsätzlich können im Zuge des Verfahrens sämtliche geometrischen Eigenschaften des Aufnahmebereichs und/oder der aufzunehmenden Seite des Batteriemoduls vermessen werden, welche sich auf die Größe und Form des mit dem Wärmeleitmaterial auszufüllenden Spalts auswirken. Je exakter die Vermessung erfolgt, desto exakter kann auch die Größe und Form des Spalts und somit die entsprechende Dosiervorgabe hinsichtlich des Wärmeleitmaterials ausfallen.

Eine weitere Ausführungsform der Erfindung sieht vor, dass die Vermessung mittels eines 3D-Kamerasystems, einer Lasermessvorrichtung oder eines Messtasters erfolgt. Die Messvorrichtung kann also optische Systeme aber auch taktile Systeme aufweisen, um die Vermessung durchzuführen. Idealerweise erfolgt die Vermessung dabei kontinuierlich oder zumindest durch ein entsprechend fein aufgelöstes diskretes Messraster. Insbesondere Formabweichungen und Lageabweichungen innerhalb der zulässigen Toleranzen werden bei dem Aufnahmebereich und/oder der aufzunehmenden Seite des Batteriemoduls so zuverlässig erfasst. Zur Erhöhung der Messgenauigkeit oder zur Validierung der Messergebnisse können auch verschiedene optische und/oder taktile Messysteme miteinander kombiniert werden.

Eine weitere Ausführungsform der Erfindung sieht vor, dass beim Ermitteln der Dosiervorgabe die Wärmeübertragungsfläche und/oder die Seite des Batteriemoduls in einzelne Segmente unterteilt wird, wobei für die einzelnen Segmente jeweilige Einzelvolumina betreffend das Wärmeleitmaterial festgelegt werden. Im Zuge der Vermessung ergeben sich Messdaten, auf deren Basis eine allgemeine Toleranzlage hinsichtlich des Aufnahmebereichs der Aufnahmestruktur und/oder der aufzunehmenden Seite des Batteriemoduls ermittelt werden kann. Dabei können auch lokale und globale Unterschiede erfasst werden. Darüber hinaus ist es auch möglich, Ausgleichsfunktionen für bestimmte Auflagepunkte bzw. Anlagepunkte zu berücksichtigen und basierend darauf das notwendige Dosiervolumen hinsichtlich des Wärmeleitmaterials zu ermitteln. Dadurch, dass beim Ermitteln der Dosiervorgabe die Wärmeübertragungsfläche und/oder die aufzunehmende Seite des Batteriemoduls in einzelne Segmente unterteilt wird, ist es auf besonders effektive Weise möglich, den einzelnen Segmenten jeweilige Einzelvolumina betreffend das aufzutragende Wärmeleitmaterial zuzuordnen. Dadurch ergibt sich eine besonders einfach umsetzbare Dosiervorgabe für die verwendete Dosiervorrichtung.

Gemäß einer weiteren möglichen Ausführungsform der Erfindung ist es vorgesehen, dass beim Ermitteln der Dosiervorgabe lokale Unterschiede bezüglich Steifigkeiten der Aufnahmestruktur und/oder des Batteriemoduls berücksichtigt werden. So kann beispielsweise in einem mittleren Bereich eine gewisse Übermenge an Wärmeleitmaterial vorgesehen werden, um eine Durchbiegung bzw. Spaltvergrößerung beim Verpressen des aufgebrachten Wärmeleitmaterials auszugleichen. Handelt es sich bei der Aufnahmestruktur beispielsweise um einen Batterierahmen, so kann dieser unterschiedliche Steifigkeiten in bestimmen Rahmenzonen aufweisen. Derartige unterschiedliche Steifigkeiten können sich beim Verpressen des Wärmeleitmaterials entsprechend auswirken, sodass diese Eigenschaften ebenfalls bei der Ermittlung der Dosiervorgabe Berücksichtigung finden können. Durch Berücksichtigung lokaler Unterschiede bezüglich Steifigkeiten der Aufnahmestruktur und/oder des Batteriemoduls ist es also möglich, die Dosiervorgabe hinsichtlich des Wärmeleitmaterials besonders exakt an die tatsächlich vorhandenen Gegebenheiten anzupassen.

Erfindungsgemäß ist vorgesehen, dass das Wärmeleitmaterial in Form von mehreren Linien aufgetragen wird, wobei beim Ermitteln der Dosiervorgabe jeweilige Querschnitte der Linien in Abhängigkeit von der Größe und Form des auszufüllenden Spalts lokal angepasst vorgegeben werden. Mit anderen Worten wird also als Auftragsform bezüglich des Wärmeleitmaterials eine Art Linien-Auftragsbild gewählt, bei welchem das Wärmeleitmaterial in Form von mehreren Linien bzw. Raupen aufgetragen wird. Dies ist insbesondere im Zusammenhang mit der zuvor erwähnten segmentartigen Unterteilung der Wärmeübertragungsfläche und/oder der aufzunehmenden Seite des Batteriemoduls vorteilhaft. Denn diese Art von linienartigem Auftragsbild hinsichtlich des Wärmeleitmaterials kann ganz einfach auf die diskreten Elemente bzw. Segmente angewendet werden. Ein solches Linien-Auftragsbild lässt sich leicht auf die thermisch anzubindende Fläche, also die Wärmeübertragungsfläche der Aufnahmestruktur und/oder der aufzunehmenden Seite des Batteriemoduls, verteilen und in Segmente unterteilen. Der Auftrag des Wärmeleitmaterials kann in Form von linienförmigen Raupen diverser Querschnittsformen erfolgen, beispielsweise in Form von runden oder auch dreieckigen Querschnitten. Durch diese Auftragsform in Form von mehreren Linien hinsichtlich des Wärmeleitmaterials lässt sich die Dosiervorgabe besonders einfach und exakt umsetzen.

Gemäß einer weiteren Ausführungsform der Erfindung ist es vorgesehen, dass durch eine Regelung einer Durchflussrate und/oder Dosiergeschwindigkeit die Querschnitte der Linien beim Auftragen des Wärmeleitmaterials gemäß der Dosiervorgabe lokal angepasst werden. Eine Volumensteuerung lokaler Art beim Aufbringen des Wärmeleitmaterials kann beispielsweise ganz einfach durch Variation der Dicke, der Höhe bzw. ganz allgemein des Querschnitts erfolgen. Das kann ganz einfach beispielsweise durch Regelung der Durchflussrate und/oder der Dosiergeschwindigkeit - also der Vorschubgeschwindigkeit, gemäß welcher z.B. ein Dosierkopf der Dosiervorrichtung vorwärts bewegt wird - erfolgen. Auf diese Weise ist es exakt und einfach möglich, die ermittelte Dosiervorgabe auch beim Auftragen des Wärmeleitmaterials entsprechend umzusetzen. Unabhängig davon, wie bzw. in welcher Form das Wärmeleitmaterial aufgetragen wird, erfolgt eine Dosierung bzw. Gestaltung des Materialeintrags gemäß der lokal ermittelten Volumina des Spalts.

Eine weitere Ausführungsform der Erfindung sieht vor, dass beim Ermitteln der Dosiervorgabe in Abhängigkeit von der Größe und Form des auszufüllenden Spalts lokal die Anzahl der Linien variiert wird. Ganz allgemein ist also während des Aufbringens des Wärmeleitmaterials auch ein Umschalten der Auftragsform bzw. des Auftragsbildes denkbar, zum Beispiel durch Umschalten von sechs auf drei Linien bzw. Raupen bei lokal sehr geringen benötigten Volumina und umgekehrt. Das Auftragsbild kann also in Abhängigkeit von dem lokal aufzufüllenden Volumen des Spalts angepasst werden. Dadurch kann sichergestellt werden, dass der Spalt zwischen der Wärmeübertragungsfläche der Aufnahmestruktur und der aufzunehmenden Seite des Batteriemoduls nicht überfüllt wird. Die Auftragsform muss nicht auf linienartige Auftragsformen beschränkt sein. Es ist auch z.B. möglich, einen punktförmigen Auftrag des Wärmeleitmaterials zu wählen. Auch kann die Auftragsart des Wärmeleitmaterials variiert werden, indem dieses z.B. in bestimmten Bereichen aufgesprüht, aufgestrichen oder anderweitig aufgetragen wird. Die Auftragsart kann insbesondere auch an die jeweils gewählte Auftragsform angepasst werden. Zudem kann auch z.B. die Art der Unterteilung der Wärmeübertragungsfläche und/oder der Seite des Batteriemoduls in einzelne Segmente variiert werden - also eine Variation einer Rasteranordnung vorgenommen werden. Die Art der Unterleitung in die Segmente erfolgt dabei z.B. angepasst an die jeweils gewählte Auftragsform. Zudem ist es auch möglich, die Auftragsform lokal zu variieren. So könnte z.B. in bestimmten Bereichen eine linienartige Auftragsform für das Wärmeleitmaterial gewählt werden, wobei in anderen Bereichen eine punktförmige Auftragsform des Wärmeleitmaterials gewählt und in wiederum anderen Bereichen z.B. eine andere Geometrie bzw. Form für das Wärmeleitmaterial gewählt wird.

Abstände zwischen den jeweils gewählten Formen des Wärmeleitmaterials können ebenfalls bedarfsgerecht variiert werden, um das Auftragsbild anzupassen. Durch Anpassung des Auftragsbilds betreffend die Größe, Anordnung und/oder Abstände zwischen dem Wärmeleitmaterial kann ein möglichst optimaler Füllgrad an Wärmeleitmaterial erzielt werden - ohne zu viel und auch ohne zu wenig davon aufzutragen. Unter der Auftragsform ist insbesondere die Form bzw. Gestalt zu verstehen, gemäß welcher das Wärmeleitmaterial aufgetragen wird, also z.B. linienförmig, punktförmig oder dergleichen. Das Auftragsbild ergibt sich dann aus der jeweils gewählten Auftragsform und Anordnung des Wärmeleitmaterials auf der betreffenden Auftragsfläche, also der Wärmeübertragungsfläche und/oder der aufzunehmenden Seite des Batteriemoduls, zu verstehen. Das Auftragsbild wird also durch jeweils gewählte Abstände zwischen einzelnen Bereichen des aufgetragenen Wärmeleitmaterials bestimmt, aber auch durch die jeweils gewählte Auftragsform (punktförmig, linienförmig, flächig, etc.) des Wärmeleitmaterials und wie großflächig einzelne Elemente des Wärmeleitmaterials aufgetragen werden.

Eine weitere mögliche Ausführungsform der Erfindung sieht vor, dass mehrere Batteriemodule und Aufnahmestrukturen vermessen werden, wobei in Abhängigkeit von der Vermessung eine Zuordnung der Batteriemodule zu den Aufnahmestrukturen nach zumindest einem vorgegebenen Zuordnungskriterium, insbesondere im Hinblick auf eine möglichst geringe Dosiermenge des Wärmeleitmaterials zum Ausfüllen des jeweiligen Spalts, erfolgt. Mit anderen Worten kann also durch beidseitiges Vermessen von mehreren Batteriemodulen und mehreren Aufnahmestrukturen eine Art Matching-Prozess durchgeführt werden. So können bestmögliche Paarungen zwischen jeweiligen Batteriemodulen und Aufnahmestrukturen vorgenommen werden. Dies kann beispielsweise im Hinblick darauf erfolgen, dass der sich in der bestimmungsgemäßen Einbaulage ergebende Spalt zwischen dem jeweiligen Batteriemodul und der jeweiligen Aufnahmestruktur besonders klein ist, sodass eine besonders geringe Dosiermenge an Wärmeleitmaterial erforderlich ist. Auch ist es beispielsweise denkbar, dass die genaue Formgebung der Wärmeübertragungsfläche der Aufnahmestruktur und der aufzunehmenden Seite des Batteriemoduls derart berücksichtigt werden und die Zuordnung zwischen betreffendem Batteriemodul und Aufnahmestruktur so erfolgt, dass eine besonders gleichmäßige Spaltdicke und somit eine besonders gleichmäßige Dicke an Wärmeleitmaterial vorliegt. Grundsätzlich können verschiedenste Zuordnungskriterien vorgegeben werden, nach denen das Matching bzw. die Zuordnung der unterschiedlichen Batteriemodule und Aufnahmestrukturen erfolgt.

Gemäß einer weiteren möglichen Ausführungsform der Erfindung ist es vorgesehen, dass aus der Vermessung resultierende Daten dazu genutzt werden, zu überprüfen, ob vorgegebene Toleranzen bei der Aufnahmestruktur und/oder bei dem Batteriemodul eingehalten worden sind. Ganz allgemein können die besagten Daten also auch zum Abgleich genutzt werden, beispielsweise um zu überprüfen, ob die betreffenden Bauteile mit Zeichnungsangaben, z.B. mit vorgegebenen Toleranzbereichen, übereinstimmen, sodass auf diese Art und Weise n.i.O-Teile (n.i.O. = nicht in Ordnung), also Ausschussteile, identifiziert werden können.

Gemäß einer weiteren möglichen Ausführungsform der Erfindung ist es vorgesehen, dass aus der Vermessung resultierende Daten dazu genutzt werden, einen Verschleiß an Werkzeugen und/oder Halbzeugen zu ermitteln, welche zur Herstellung der Aufnahmestruktur und/oder des Batteriemoduls verwendet werden. So können beispielsweise die aus der Vermessung resultierenden Daten also exakt statistisch ausgewertet werden. In Kenntnis der aus der Vermessung resultierenden Daten ist es möglich, anhand der sich ändernden Form bzw. Dimension oder auch Lagetoleranzen der Aufnahmestruktur und des Batteriemoduls zu erkennen, inwieweit gewisse Werkzeuge oder Halbzeuge verschleißen, welche zur Herstellung der Aufnahmestruktur und/oder des Batteriemoduls verwendet werden. Auswirkungen auf andere Prozesse, insbesondere Folgeprozesse, können so auch früh erkannt werden.

Das erfindungsgemäße System zum Herstellen einer thermischen Schnittstelle in einer Batterie für ein Kraftfahrzeug umfasst eine Messvorrichtung, eine Datenverarbeitungseinrichtung, eine Dosiervorrichtung und eine Montagevorrichtung, welche dazu ausgelegt sind, das erfindungsgemäße Verfahren oder eine vorteilhafte Ausführungsform des erfindungsgemäßen Verfahrens durchzuführen. Vorteilhafte Ausgestaltungen des erfindungsgemäßen Verfahrens sind als vorteilhafte Ausgestaltungen des erfindungsgemäßen Systems und umgekehrt anzusehen, wobei das System insbesondere Mittel zur Durchführung der Verfahrensschritte aufweist.

Von Vorteil ist auch ein Computerprogrammprodukt oder Computerprogramm mit Programmcode, der auf einem maschinenlesbaren Träger oder Speichermedium wie einem Halbleiterspeicher, einem Festplattenspeicher oder einem optischen Speicher gespeichert sein kann und zur Durchführung, Umsetzung und/oder Ansteuerung der Schritte des Verfahrens nach einer der vorstehend beschriebenen Ausführungsformen verwendet wird, insbesondere wenn das Programmprodukt oder Programm auf einem Computer oder einer Vorrichtung ausgeführt wird.

Weitere Vorteile, Merkmale und Einzelheiten der Erfindung ergeben sich aus der nachfolgenden Beschreibung eines bevorzugten Ausführungsbeispiels sowie anhand der Zeichnung. Die vorstehend in der Beschreibung genannten Merkmale und Merkmalskombinationen sowie die nachfolgend in der Figurenbeschreibung und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

### Kurze Figurenbeschreibung

Die Zeichnung zeigt in:
- Fig. 1: eine schematische Querschnittsansicht eines Ausschnitts von einer Batterie für ein Kraftfahrzeug mit einem ein an einer Aufnahmestruktur angeordnetem Batteriemodul, wobei zwischen dem Batteriemodul und der Aufnahmestruktur ein als thermisches Interface-Material bzw. als Gapfiller dienendes Wärmeleitmaterial angeordnet ist;
- Fig. 2: eine Draufsicht auf die Aufnahmestruktur, wobei im Bereich einer Wärmeübertragungsfläche der Aufnahmestruktur das Wärmeleitmaterial noch vor der Anbringung des Batteriemoduls linienförmig aufgetragen worden ist;
- Fig. 3: eine Visualisierung von Daten, welche beim Vermessen des Aufnahmebereichs gewonnen worden sind; und in
- Fig. 4: eine schematische Darstellung, mittels welcher eine Ermittlung einer Dosiervorgabe für das Wärmeleitmaterial sowie das Auftragen des Wärmeleitmaterials dargestellt ist.

In den Figuren sind gleiche oder funktionsgleiche Elemente mit den gleichen Bezugszeichen versehen worden.

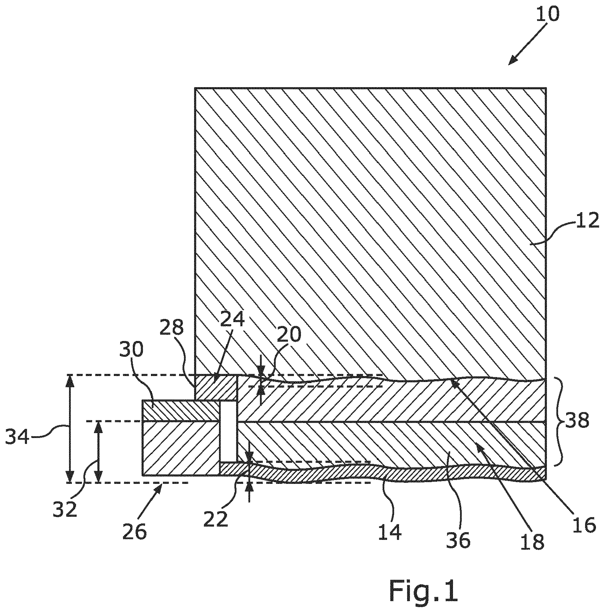

Eine Batterie 10 für ein Kraftfahrzeug ist ausschnittsweise in einer schematischen Seitenansicht in Fig. 1 gezeigt. Die Batterie 10 kann mehrere Batteriemodule 12 aufweisen, wobei vorliegend nur eines der Batteriemodule 12 schematisch dargestellt ist. Die Batteriemodule 12 können beispielsweise mehrere miteinander verschaltete Lithium-Ionen-Zellen umfassen, die in einem nicht näher dargestellten Gehäuse des Batteriemoduls 12 angeordnet sind. Des Weiteren ist eine Wärmeübertragungsfläche 14 zu erkennen, welche zu einer hier nicht näher bezeichneten Aufnahmestruktur zum Aufnehmen des Batteriemoduls 12 gehört. Bei der Wärmeübertragungsfläche 14 kann es sich beispielsweise um eine Schottwand oder auch um eine Gehäuseseite mit einer Wärmesenke bzw. Kühlplatte handeln.

Zwischen einer Unterseite 16 des Batteriemoduls 12 und der Wärmeübertragungsfläche 14 ergibt sich in einer bestimmungsgemäßen Einbaulage des Batteriemoduls 12 ein hier nicht näher bezeichneter Spalt, welcher weitestgehend mit einem Wärmeleitmaterial 18 ausgefüllt ist. Bei dem Wärmeleitmaterial 18 handelt es sich um ein thermisches Interface-Material bzw. um einen sogenannten Gapfiller. Das Wärmeleitmaterial 18 dient dazu, eine möglichst optimale thermische Anbindung und somit Wärmeübertragung von dem Batteriemodul 12 zur Wärmeübertragungsfläche 14 zu gewährleisten. Dafür ist es unter anderem wichtig, dass der besagte Spalt zwischen der Unterseite 16 des Batteriemoduls 12 und der Wärmeübertragungsfläche 14 möglichst lufteinschlussfrei ausgefüllt wird.

Fertigungsbedingt ist es üblicherweise nicht möglich, die Batteriemodule 12 und insbesondere auch die Wärmeübertragungsfläche 14 immer exakt gleich herzustellen. Allein auch schon aus Kostengründen werden daher gewisse Toleranzen vorgegeben bzw. erlaubt, innerhalb welcher sich Maßschwankungen, Lageschwankungen und Formschwankungen beim Batteriemodul 12 und der Wärmeübertragungsfläche 14 einstellen dürfen. Ein Toleranzbereich 20 hinsichtlich einer Form der Unterseite 16 des Batteriemoduls 12 ist hier schematisch eingezeichnet. Genauso ist ein Toleranzbereich 22 hinsichtlich einer Form der Wärmeübertragungsfläche 14 schematisch angedeutet.

Es können sich also unterschiedliche Welligkeiten bzw. Vorwölbungen an der Unterseite 16 und an der Wärmeübertragungsfläche 14 ergeben, die rein fertigungstechnisch auftreten können und innerhalb der Toleranzbereiche 20, 22 auch geduldet werden. Des Weiteren sind jeweilige Anbindungspunkte 24, 26 an der Unterseite 16 des Batteriemoduls 12 und im Bereich der Wärmeübertragungsfläche 14 schematisch angedeutet. Bei den Anbindungspunkten 24, 26 sind ebenfalls gewisse Toleranzbereiche 28, 30 zulässig. Insbesondere können sich hinsichtlich der Anbindungspunkte 24, 26 gewisse Lagetoleranzen ergeben.

Aufgrund der verschiedenen Toleranzbereiche 20, 22, 28, 30 ergibt sich ein gewisser Spielraum im Hinblick auf die Größe und Form des besagten Spalts, welcher mittels des Wärmeleitmaterials 18 auszufüllen ist. Schematisch sind eine minimale Spalthöhe 32 und eine maximale Spalthöhe 34 eingezeichnet, welche sich bei Ausreizung sämtlicher Toleranzen ergeben können. Entsprechend der minimalen bzw. maximalen Spalthöhe 32, 34 ergibt sich auch ein entsprechendes Dosiervolumen 36 bei kleinstmöglichem Spalt und ein Dosiervolumen 38 bei maximaler Größe des Spalts.

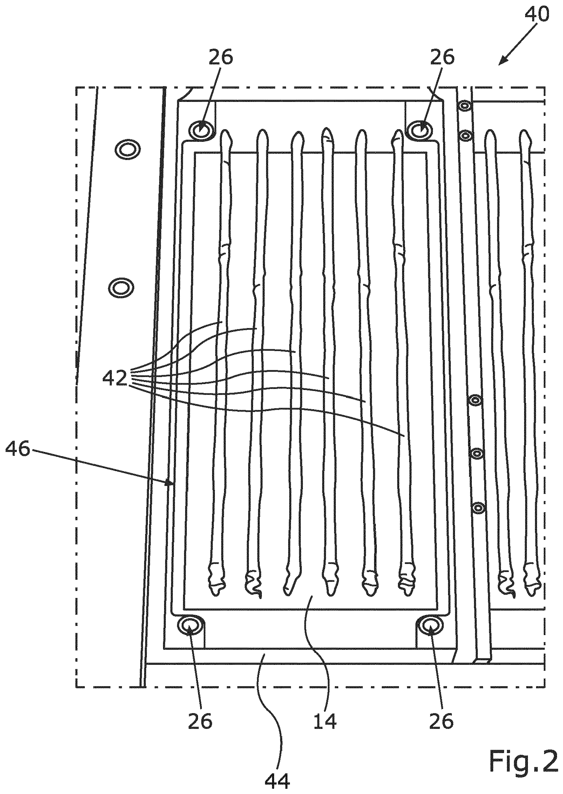

In Fig. 2 ist die bereits erwähnte Aufnahmestruktur 40 der Batterie 10 ausschnittsweise in einer Perspektivansicht gezeigt. Vorliegend ist die zuvor bereits erwähnte Wärmeübertragungsfläche 14 zu erkennen, auf welcher in Form mehrerer Linien 42 das Wärmeleitmaterial 18 aufgetragen worden ist, und zwar noch bevor das Batteriemodul 12 montiert wurde. Vorliegend sind die Anbindungspunkte 26 im Bereich der Wärmeübertragungsfläche 14 zu erkennen, welche in Form von Schraublaschen ausgebildet sind. Die Aufnahmestruktur 40 weist einen Batterierahmen 44 und mehrere von diesem rahmenförmig umschlossene Aufnahmebereiche 46 auf, welche jeweils dazu dienen, eines der Batteriemodule 12 mit ihrer jeweiligen Unterseite 16 aufzunehmen. Die Linien 42 des Wärmeleitmaterials 18 werden beim Montieren der jeweiligen Batteriemodule 12 verpresst und bilden anschließend eine jeweilige thermische Schnittstelle zwischen der Unterseite 16 des betreffenden Batteriemoduls 12 und der Wärmeübertragungsfläche 14 des betreffenden Aufnahmebereichs 46. Anhand der nachfolgenden Figuren wird ein Verfahren zum Herstellen der thermischen Schnittstellen näher erläutert.

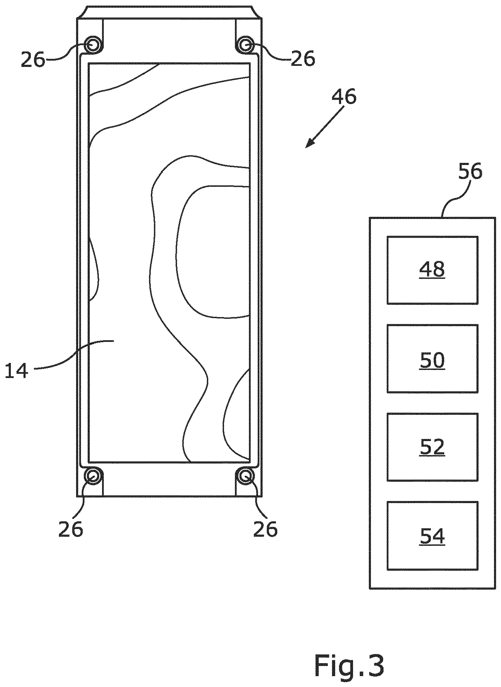

In Fig. 3 ist einer der Aufnahmebereiche 46 der Batterie 10 in einer Draufsicht gezeigt, wobei ein Messergebnis betreffend die Wärmeübertragungsfläche 14 des hier gezeigten Aufnahmebereichs 46 dargestellt ist. Mittels einer schematisch angedeuteten Messvorrichtung 48 wird der Aufnahmebereich 46 vermessen. Die Messvorrichtung kann dafür beispielsweise ein 3D-Kamerasystem, eine Lasermessvorrichtung, einen Messtaster und/oder dergleichen aufweisen. Im Zuge der Vermessung des Aufnahmebereichs 46 wird insbesondere eine Form der Wärmeübertragungsfläche 14 erfasst und vermessen, vor allem Welligkeiten und/oder Vorwölbungen. Zudem wird vorzugsweise auch eine jeweilige Lage der als Befestigungspunkte dienenden Anbindungspunkte 26 vermessen und somit erfasst. Genauso ist es auch möglich, die Form der Unterseite 16 des betreffenden Batteriemoduls 12, welches in den Aufnahmebereich 46 eingesetzt werden soll, vor allem im Hinblick auf Welligkeiten und/oder Vorwölbungen zu vermessen und zu erfassen. Genauso können auch jeweilige Lagen der Anbindungspunkte 24 (siehe Fig. 1) des Batteriemoduls 12 erfasst und vermessen werden.

Vorliegend sind im Zuge der Vermessung des Aufnahmebereichs 46 gewonnene Daten in Form nicht näher bezeichneter Höhenlinien visualisiert worden. Dadurch können vor allem besagte Welligkeiten und/oder Vorwölbungen der Wärmeübertragungsfläche 14 exakt quantifiziert werden. Das gleiche kann auch zusätzlich oder alternativ bezüglich des Batteriemoduls 12 vorgenommen werden.

In Abhängigkeit von der Vermessung wird eine Größe und Form des betreffenden Spalts ermittelt, welcher sich in der bestimmungsgemäßen Einbaulage des betreffenden Batteriemoduls 12 zwischen der Wärmeübertragungsfläche 14 und der Unterseite 16 des Batteriemoduls 12 ergibt. Diese Ermittlung, also Auswertung und Analyse, der betreffenden Messergebnisse, kann mittels einer schematisch angedeuteten Datenverarbeitungseinrichtung 50 erfolgen. Nachdem die Größe und Form des betreffenden Spalts ermittelt worden ist, wird basierend darauf mittels der Datenverarbeitungseinrichtung 50 eine Dosiervorgabe für das Wärmeleitmaterial 18 ermittelt, welche den Spalt zwischen der Unterseite 16 des Batteriemoduls 12 und der betreffenden Wärmeübertragungsfläche 14 ausfüllen soll. Die Dosiervorgabe betreffende Daten werden von der Datenverarbeitungseinrichtung 50 an eine Dosiervorrichtung 52, welche ebenfalls hier nur schematisch angedeutet ist, übertragen.

Diese Dosiervorrichtung 52 nimmt dann das Aufbringen des Wärmeleitmaterials 18, beispielsweise wie in Fig. 2 dargestellt, in Form einzelner Linien 42 vor. Nachdem das Wärmeleitmaterial 18 aufgetragen wurde, erfolgt die eigentliche Montage des Batteriemoduls 12 im Aufnahmebereich 46. Die Montage wird mittels einer hier ebenfalls nur schematisch angedeuteten Montagevorrichtung 54 vorgenommen. Die Messvorrichtung 48, die Datenverarbeitungseinrichtung 50, die Dosiervorrichtung 52 und die Montagevorrichtung 54 bilden zusammen ein System 56 zum Herstellen jeweiliger thermischer Schnittstellen innerhalb der Batterie 10, welche aus Wärmeleitmaterial 18 gebildet werden.

Im Zuge der Montage des Batteriemoduls 12 gelangt die Unterseite 16 des betreffenden Batteriemoduls 12 in Kontakt mit den einzelnen Linien 42 des aufgetragenen bzw. eingebrachten Wärmeleitmaterials 18. Beim Setzvorgang des Batteriemoduls 12 werden die einzelnen Linien 42 verpresst, wonach das verpresste Wärmeleitmaterial 18 dann die besagte thermische Schnittstelle zwischen der Unterseite 16 des betreffenden Batteriemoduls 12 und der Wärmeübertragungsfläche 14 bildet. Aus den mittels der Messvorrichtung 48 gewonnenen Messdaten ermittelt die Datenverarbeitungseinrichtung 50 also eine Art allgemeine Toleranzlage, wobei lokale und globale Unterschiede erfasst werden. Die Ermittlung der Dosiervorgabe erfolgt dabei vorzugsweise mittels eines Algorithmus, welcher auf der Datenverarbeitungseinrichtung 50 implementiert ist.

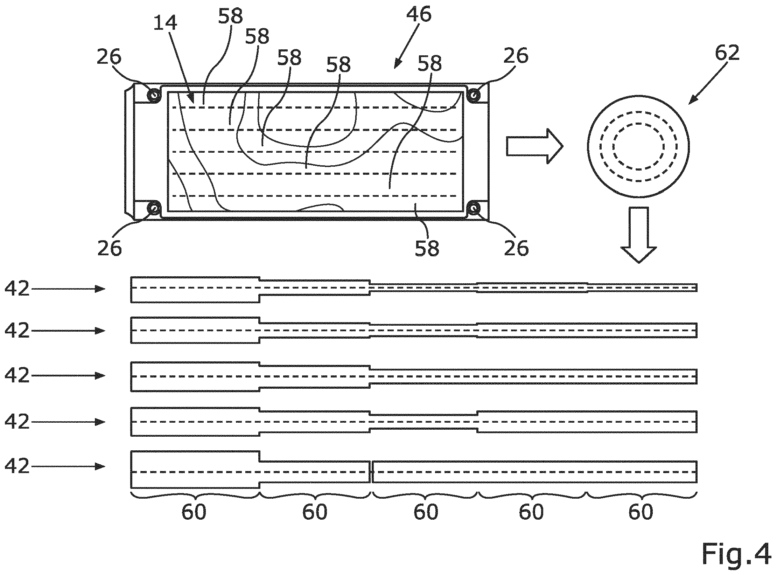

In Fig. 4 ist eine mögliche Vorgehensweise zum Auswerten und Umsetzen der Vermessung in besagte Dosiervorgabe schematisch dargestellt. Beim Ermitteln der Dosiervorgabe wird die Wärmeübertragungsfläche 14 in einzelne Bahnen 58 aufgeteilt. Die einzelnen Bahnen 58 können dann wiederum in einzelne Segmente 60 unterteilt werden, was hier schematisch unterhalb von den einzelnen Linien 42 dargestellt ist, gemäß welchen das Wärmeleitmaterial 18 auf die Wärmeübertragungsfläche 14 aufgetragen wird. Für die einzelnen Segmente 60 können jeweilige Einzelvolumina betreffend das aufzutragende Wärmeleitmaterial 18 im Zuge der Ermittlung der Dosiervorgabe vorgegeben werden. So können ganz einfach lokal vorhandene Gegebenheiten hinsichtlich der Form und Größe des auszufüllenden Spalts berücksichtigt werden. Die Berechnung der Einzelvolumina wird dann übersetzt bzw. zugeordnet auf die jeweils gewählte Auftragsform, vorliegend in Form der fünf Linien 42, gemäß welchen die Dosiervorrichtung 52 das Wärmeleitmaterial 18 auf der Wärmeübertragungsfläche 14 aufträgt.

Wie oben rechts schematisch dargestellt, kann ein Querschnitt 62 der jeweiligen Linien 42 variiert werden, um den vorhandenen Spalt zwischen der Unterseite 16 des betreffenden Batteriemoduls 12 und der Wärmeübertragungsfläche 14 lokal möglichst optimal und ohne Überdosierung auszufüllen. Beim Ermitteln der Dosiervorgabe können auch lokale Unterschiede bezüglich Steifigkeiten der Aufnahmestruktur 40 und/oder des Batteriemoduls 12 Berücksichtigung finden. So ist es beispielsweise möglich, in einem ermittelten Bereich zum Ausgleich von Verformungen bzw. Elastizitäten des Wärmeleitmaterials 18 bzw. des Batteriemoduls 12 und/oder der Aufnahmestruktur 40 eine gewisse Übermenge an Wärmeleitmaterial einzuplanen bzw. vorzusehen.

Wie vorliegend zu erkennen, ist es vorgesehen, das Wärmeleitmaterial 18 in Form der jeweiligen Linien 42 mittels der Dosiervorrichtung 52 aufzutragen. Beim Ermitteln der Dosiervorgabe können beispielsweise die besagten Querschnitte 62 der jeweiligen Linien 42 in Abhängigkeit von der Größe und Form des lokal auszufüllenden Spalts angepasst vorgegeben werden. Durch eine Regelung einer Durchflussrate und/oder Dosiergeschwindigkeit bei der Dosiervorrichtung 52 können die Querschnitte 62 der jeweiligen Linien 42 beim Aufbringen des Wärmeleitmaterials 18 gemäß der entsprechenden Dosiervorgabe lokal angepasst werden. Das ist hier schematisch angedeutet, indem die Liniendicke der einzelnen Linien 42 je nach Segment 60 teilweise unterschiedlich dargestellt wurde.

Auch ist es möglich, das gewählte Auftragsbild zu variieren, indem beispielsweise die Anzahl der Linien 42 lokal verändert wird. So ist es beispielsweise möglich, in einem Bereich, in dem relativ wenig Wärmeleitmaterial 18 zum Ausfüllen des Spalts erforderlich ist, statt der hier gezeigten fünf Linien 42 nur noch drei Linien 42 vorzusehen. Natürlich können bei Bedarf auch mehr als die fünf Linien 42 aufgetragen werden. Die Form der Querschnitte 62 der Linien 42 ist hier nur beispielhaft rund gewählt. Im Prinzip sind beliebige Querschnitte 62 bzw. Querschnittsformen möglich, sodass die Linien 42 beispielsweise auch dreieckige, rechteckige oder anderweitig geformte Querschnitte 62 aufweisen können. Statt des hier gezeigten linienförmigen Auftragsbilds ist es auch möglich, andere Auftragsbilder zu wählen.

Nach dem erfolgten Dosieren bzw. Auftragen der Linien 42 wird innerhalb eines jeweils spezifischen Prozessfensters das von den Linien 42 aufgetragene bzw. eingebrachte Wärmeleitmaterial 18 durch Montieren bzw. Einsetzen des betreffenden Batteriemoduls 12 verpresst. Dieser Prozess des Setzens des betreffenden Batteriemoduls 12 kann auch nachgelagert erfolgen, je nachdem was für ein konkretes Wärmeleitmaterial als Gapfiller bzw. thermisches Interface-Material eingesetzt wird. Nach dem Montieren und Setzen des betreffenden Batteriemoduls 12 wurden die einzelnen Linien 42 so verpresst, dass diese den zuvor vorhandenen Spalt zwischen der Unterseite 16 des betreffenden Batteriemoduls 12 und der Wärmeübertragungsfläche 14 zumindest im Wesentlichen ohne Lufteinschlüsse ausfüllen. Dadurch ergibt sich eine besonders gute thermische Schnittstelle zwischen dem betreffenden Batteriemodul 12 und der Wärmeübertragungsfläche 14.

Es ist auch möglich, dass vor dem Ermitteln der Dosiervorgabe mehrere der Batteriemodule 12 und mehrere der Aufnahmestrukturen 40 vermessen werden, wobei in Abhängigkeit von der Vermessung eine Zuordnung der jeweiligen Batteriemodule 12 zu den jeweiligen Aufnahmestrukturen 40 nach zumindest einem vorgegebenen Zuordnungskriterium erfolgt. Das Zuordnungskriterium kann beispielsweise beinhalten, dass eine möglichst geringe Dosiermenge des Wärmeleitmaterials 18 erforderlich ist. Auch ist es möglich, dass das Zuordnungskriterium umfasst, dass eine möglichst gleichmäßige Dicke des Wärmeleitmaterials 18 möglich ist.

Durch beidseitiges Vermessen der Batteriemodule 12 und der Aufnahmestruktur 40 kann also das jeweils am besten geeignetste Batteriemodul 12 für den am besten geeigneten Aufnahmebereich, vorliegend in Form jeweiliger Rahmenfächer, der Aufnahmestruktur 40 gewählt werden. Allgemein können die aus der Vermessung resultierenden Daten auch für einen Abgleich genutzt werden, beispielsweise um zu überprüfen, ob die Batteriemodule 12 und die Aufnahmestruktur 40 jeweiligen Zeichnungsangaben bzw. Gültigkeitsbereiche im Hinblick auf jeweilige Toleranzen erfüllen, sodass n.i.O-Teile identifiziert werden können. Auch ist es möglich, die Messungen exakt statistisch auszuwerten, sodass beispielsweise Tendenzen im Hinblick auf Verschleiß an Formwerkzeugen bzw. Halbzeugen erkannt werden können, die zur Herstellung der betreffenden Batteriemodule 12 und/oder der Aufnahmestruktur 40 verwendet werden. Derartige Analysen können auch Auswirkungen auf Prozesse, insbesondere Folgeprozesse, haben und somit früh erkannt werden.

### BEZUGSZEICHENLISTE

- 10: Batterie
- 12: Batteriemodul
- 14: Wärmeübertragungsfläche
- 16: Unterseite des Batteriemoduls
- 18: Wärmeleitmaterial
- 20: Toleranzbereich hinsichtlich der Form der Unterseite des Batteriemoduls
- 22: Toleranzbereich hinsichtlich der Form der Wärmeübertragungsfläche
- 24: Anbindungspunkte des Batteriemoduls
- 26: Anbindungspunkte im Bereich der Wärmeübertragungsfläche
- 28: Toleranzbereich im Hinblick auf die Lage der Anbindungspunkte des Batteriemoduls
- 30: Toleranzbereich im Hinblick auf die Lage der Anbindungspunkte im Bereich der Wärmeübertragungsfläche
- 32: minimale Spalthöhe
- 34: maximale Spalthöhe
- 36: Dosiervolumen bei Minimalspalt
- 38: Dosiervolumen bei maximaler Spalthöhe
- 40: Aufnahmestruktur
- 42: Linien
- 44: Batterierahmen
- 46: Aufnahmebereich
- 48: Messvorrichtung
- 50: Datenverarbeitungseinrichtung
- 52: Dosiervorrichtung
- 54: Montagevorrichtung
- 56: System
- 58: Bahnen
- 60: Segmente
- 62: Querschnitt der Linien

## Patentansprüche

1. Verfahren zum Herstellen einer thermischen Schnittstelle in einer Batterie (10) für ein Kraftfahrzeug, umfassend die Schritte:
- Bereitstellen wenigstens eines Batteriemoduls (12) und wenigstens einer Aufnahmestruktur (40) mit einem eine Wärmeübertragungsfläche (14) aufweisenden Aufnahmebereich (46) zum Aufnehmen einer Seite (16) des Batteriemoduls (12) in einer bestimmungsgemäßen Einbaulage;
- Vermessen des Aufnahmebereichs (46) und/oder der Seite des Batteriemoduls (12), mittels einer Messvorrichtung (48);
- Ermitteln einer Größe und Form eines Spalts, welcher sich in der bestimmungsgemäßen Einbaulage des Batteriemoduls (12) zwischen der Wärmeübertragungsfläche (14) und der Seite (16) des Batteriemoduls (12) ergibt, mittels einer Datenverarbeitungseinrichtung (50) auf Basis der Vermessung;
- Ermitteln einer Dosiervorgabe für ein Wärmeleitmaterial (18) zum Ausfüllen des Spalts auf Basis der ermittelten Größe und Form des Spalts mittels der Datenverarbeitungseinrichtung (50);
- Aufbringen des Wärmeleitmaterials (18) auf der Wärmeübertragungsfläche (14) und/oder der Seite (16) des Batteriemoduls (12) entsprechend der ermittelten Dosiervorgabe mittels einer Dosiervorrichtung (52);
- Montieren des Batteriemoduls (12) in der bestimmungsgemäßen Einbaulage unter Verpressen des aufgebrachten Wärmeleitmaterials (18) mittels einer Montagevorrichtung (54), wonach das verpresste Wärmeleitmaterial (18) die thermische Schnittstelle zwischen der Seite des Batteriemoduls (12) und der Wärmeübertragungsfläche (14) bildet, **gekennzeichnet dadurch, dass** das Wärmeleitmaterial (18) in Form von mehreren Linien (42) aufgetragen wird, wobei beim Ermitteln der Dosiervorgabe jeweilige Querschnitte (62) der Linien (42) in Abhängigkeit von der Größe und Form des auszufüllenden Spalts lokal angepasst vorgegeben werden..

2. Verfahren nach Anspruch 1,
**dadurch gekennzeichnet, dass**
bei der Vermessung zumindest eine der folgenden Größen erfasst wird:
- Form der Wärmeübertragungsfläche (14), insbesondere Welligkeiten und/oder Vorwölbungen;
- Form der Seite (16) des Batteriemoduls (12), insbesondere Welligkeiten und/oder Vorwölbungen;
- Lage von Befestigungspunkten des Aufnahmebereichs (46);
- Lage von Befestigungspunkten an der Seite (16) des Batteriemoduls (12).

3. Verfahren nach Anspruch 1 oder 2,
**dadurch gekennzeichnet, dass**
die Vermessung mittels eines 3D-Kamerasystems, einer Lasermessvorrichtung und/oder eines Messtasters erfolgt.

4. Verfahren nach einem der vorhergehenden Ansprüche,
**dadurch gekennzeichnet, dass**
beim Ermitteln der Dosiervorgabe die Wärmeübertragungsfläche (14) und/oder die Seite (16) des Batteriemoduls (12) in einzelne Segmente (60) unterteilt wird, wobei für die einzelnen Segmente (60) jeweilige Einzelvolumina betreffend das Wärmeleitmaterial (18) festgelegt werden.

5. Verfahren nach einem der vorhergehenden Ansprüche,
**dadurch gekennzeichnet, dass**
beim Ermitteln der Dosiervorgabe lokale Unterschiede bezüglich Steifigkeiten der Aufnahmestruktur (40) und/oder des Batteriemoduls (12) berücksichtigt werden.

6. Verfahren nach einem der vorhergehenden Ansprüche,
**dadurch gekennzeichnet, dass**
durch eine Regelung einer Durchflussrate und/oder Dosiergeschwindigkeit die Querschnitte (62) der Linien (42) beim Aufbringen des Wärmeleitmaterials (18) gemäß der Dosiervorgabe lokal angepasst werden.

7. Verfahren nach einem der vorhergehenden Ansprüche,
**dadurch gekennzeichnet, dass**
beim Ermitteln der Dosiervorgabe in Abhängigkeit von der Größe und Form des auszufüllenden Spalts lokal die Anzahl der Linien (42) variiert wird.

8. Verfahren nach einem der vorhergehenden Ansprüche,
**dadurch gekennzeichnet, dass**
mehrere Batteriemodule (12) und Aufnahmestrukturen (40) vermessen werden, wobei in Abhängigkeit von der Vermessung eine Zuordnung der Batteriemodule (12) zu den Aufnahmestrukturen (40) nach zumindest einem vorgegebenen Zuordnungskriterium, insbesondere im Hinblick auf eine möglichst geringe Dosiermenge des Wärmeleitmaterials (18) zum Ausfüllen des jeweiligen Spalts, erfolgt.

9. Verfahren nach einem der vorhergehenden Ansprüche,
**dadurch gekennzeichnet, dass**
aus der Vermessung resultierende Daten dazu genutzt werden, zu überprüfen, ob vorgegebene Toleranzen bei der Aufnahmestruktur (40) und/oder bei dem Batteriemodul (12) eingehalten worden sind.

10. Verfahren nach einem der vorhergehenden Ansprüche,
**dadurch gekennzeichnet, dass**
aus der Vermessung resultierende Daten dazu genutzt werden, einen Verschleiß an Werkzeugen und/oder Halbzeugen zu ermitteln, welche zur Herstellung der Aufnahmestruktur (40) und/oder des Batteriemoduls (12) verwendet werden.

11. System (56) zum Herstellen einer thermischen Schnittstelle in einer Batterie (10) für ein Kraftfahrzeug, umfassend eine Messvorrichtung (48), eine Datenverarbeitungseinrichtung (50), eine Dosiervorrichtung (52) und eine Montagevorrichtung (54), welche dazu ausgelegt sind, ein Verfahren nach einem der vorhergehenden Schritte durchzuführen.

12. Computerprogrammprodukt, das dazu eingerichtet ist, das Verfahren gemäß einem der Ansprüche 1 bis 10 auszuführen, umzusetzen und/oder anzusteuern.

13. Maschinenlesbares Speichermedium, auf dem das Computerprogrammprodukt gemäß Anspruch 12 gespeichert ist.

## Claims

1. Method for producing a thermal interface in a battery (10) for a motor vehicle, comprising the steps of:
- providing at least one battery module (12) and at least one receiving structure (40) with a receiving area (46), having a heat transfer surface (14), for receiving one side (16) of the battery module (12) in an intended installation position;
- measuring the receiving area (46) and/or the side of the battery module (12), by means of a measuring apparatus (48);
- ascertaining a size and shape of a gap which arises between the heat transfer surface (14) and the side (16) of the battery module (12) in the intended installation position of the battery module (12), by means of a data processing device (50) on the basis of the measurement;
- ascertaining a dosing requirement for a heat transfer material (18) for filling the gap on the basis of the ascertained size and shape by means of the data processing device (50);
- applying the heat transfer material (18) to the heat transfer surface (14) and/or the side (16) of the battery module (12) in accordance with the ascertained dosing requirement by means of a dosing apparatus (52);
- mounting the battery module (12) in the intended installation position while pressing the applied heat transfer material (18) by means of a mounting apparatus (54), whereby the pressed heat transfer material (18) forms the thermal interface between the side of the battery module (12) and the heat transfer surface (14), **characterized in that**
the heat transfer material (18) is applied in the form of a plurality of lines (42), wherein, during the ascertainment of the dosing requirement, respective cross sections (62) of the lines (42) are specified in a locally adjusted manner depending on the size and shape of the gap which is to be filled.

2. Method according to Claim 1,
**characterized in that**,
during the measurement, at least one of the following variables is acquired:
- shape of the heat transfer surface (14), in particular ripples and/or protrusions;
- shape of the side (16) of the battery module (12), in particular ripples and/or protrusions;
- position of fastening points of the receiving area (46) ;
- position of fastening points on the side (16) of the battery module (12).

3. Method according to Claim 1 or 2,
**characterized in that**
the measurement is performed by means of a 3D camera system, a laser measuring apparatus and/or a measuring probe.

4. Method according to one of the preceding claims,
**characterized in that**,
during the ascertainment of the dosing requirement, the heat transfer surface (14) and/or the side (16) of the battery module (12) are/is divided into individual segments (60), wherein respective individual volumes relating to the heat transfer material (18) are determined for the individual segments (60).

5. Method according to one of the preceding claims,
**characterized in that**,
during the ascertainment of the dosing requirement, local differences with regard to rigidities of the receiving structure (40) and/or of the battery module (12) are taken into account.

6. Method according to one of the preceding claims,
**characterized in that**,
during the application of the heat transfer material (18) in accordance with the dosing requirement, the cross sections (62) of the lines (42) are locally adjusted by controlling a flow rate and/or dosing speed.

7. Method according to one of the preceding claims,
**characterized in that**,
during the ascertainment of the dosing requirement, the number of lines (42) is varied locally depending on the size and shape of the gap which is to be filled.

8. Method according to one of the preceding claims,
**characterized in that**
a plurality of battery modules (12) and receiving structures (40) are measured, wherein, depending on the measurement, the battery modules (12) are assigned to the receiving structures (40) according to at least one predefined assignment criterion, in particular with regard to a smallest possible dosing quantity of the heat transfer material (18) for filling the respective gap.

9. Method according to one of the preceding claims,
**characterized in that**
data resulting from the measurement are used to check whether predefined tolerances for the receiving structure (40) and/or for the battery module (12) have been met.

10. Method according to one of the preceding claims,
**characterized in that**
data resulting from the measurement are used to ascertain a degree of wear on tools and/or semi-finished products which are used to produce the receiving structure (40) and/or battery module (12).

11. System (56) for producing a thermal interface in a battery (10) for a motor vehicle, comprising a measuring apparatus (48), a data processing device (50), a dosing apparatus (52) and a mounting apparatus (54) which are designed to carry out a method according to one of the preceding steps.

12. Computer program product which is configured to perform, implement and/or control the method according to one of Claims 1 to 10.

13. Machine-readable storage medium on which the computer program product according to Claim 12 is stored.

## Revendications

1. Procédé permettant de réaliser une interface thermique dans une batterie (10) pour un véhicule automobile, comprenant les étapes consistant à :
- fournir au moins un module de batterie (12) et au moins une structure de réception (40) pourvue d'une zone de réception (46) présentant une surface de transfert de chaleur (14) et destinée à recevoir un côté (16) du module de batterie (12) dans une position d'installation correcte ;
- mesurer la zone de réception (46) et/ou le côté du module de batterie (12) au moyen d'un dispositif de mesure (48) ;
- déterminer une dimension et une forme d'une fente qui se forme dans la position d'installation correcte du module de batterie (12) entre la surface de transfert de chaleur (14) et le côté (16) du module de batterie (12), au moyen d'un dispositif de traitement de données (50) sur la base du mesurage ;
- déterminer une indication de dosage pour un matériau thermoconducteur (18) pour le remplissage de la fente sur la base de la dimension et de la forme déterminées de la fente, au moyen du dispositif de traitement de données (50) ;
- appliquer le matériau thermoconducteur (18) à la surface de transfert de chaleur (14) et/ou au côté (16) du module de batterie (12) selon l'indication de dosage déterminée, au moyen d'un dispositif de dosage (52) ;
- monter le module de batterie (12) dans la position d'installation correcte en comprimant le matériau thermoconducteur appliqué (18) au moyen d'un dispositif de montage (54), suite à quoi le matériau thermoconducteur comprimé (18) forme l'interface thermique entre le côté du module de batterie (12) et la surface de transfert de chaleur (14),
**caractérisé en ce que** le matériau thermoconducteur (18) est appliqué sous la forme de plusieurs lignes (42), dans lequel lors de la détermination de l'indication de dosage, des sections transversales respectives (62) des lignes (42) sont prédéfinies de manière localement adaptée en fonction de la dimension et de la forme de la fente à remplir.

2. Procédé selon la revendication 1, **caractérisé en ce que** lors du mesurage, au moins l'une des grandeurs suivantes est acquise :
- la forme de la surface de transfert de chaleur (14), en particulier des ondulations et/ou des protubérances ;
- la forme du côté (16) du module de batterie (12), en particulier des ondulations et/ou des protubérances ;
- la position de points de fixation de la zone de réception (46) ;
- la position de points de fixation sur le côté (16) du module de batterie (12).

3. Procédé selon la revendication 1 ou 2, **caractérisé en ce que** le mesurage est effectué au moyen d'un système de caméra 3D, d'un dispositif de mesure au laser et/ou d'un palpeur de mesure.

4. Procédé selon l'une quelconque des revendications précédentes, **caractérisé en ce que** lors de la détermination de l'indication de dosage, la surface de transfert de chaleur (14) et/ou le côté (16) du module de batterie (12) sont divisés en segments individuels (60), des volumes individuels respectifs concernant le matériau thermoconducteur (18) étant définis pour les segments individuels (60).

5. Procédé selon l'une quelconque des revendications précédentes, **caractérisé en ce que** lors de la détermination de l'indication de dosage, des différences locales concernant la rigidité de la structure de réception (40) et/ou du module de batterie (12) sont prises en compte.

6. Procédé selon l'une quelconque des revendications précédentes, **caractérisé en ce qu'**une régulation d'un débit et/ou d'une vitesse de dosage permet d'adapter localement les sections transversales (62) des lignes (42) lors de l'application du matériau thermoconducteur (18) selon l'indication de dosage.

7. Procédé selon l'une quelconque des revendications précédentes, **caractérisé en ce que** lors de la détermination de l'indication de dosage, le nombre de lignes (42) varie localement en fonction de la dimension et de la forme de la fente à remplir.

8. Procédé selon l'une quelconque des revendications précédentes, **caractérisé en ce que** plusieurs modules de batterie (12) et structures de réception (40) sont mesurés, dans lequel, en fonction du mesurage, une attribution des modules de batterie (12) aux structures de réception (40) est effectuée selon au moins un critère d'attribution prédéfini, en particulier en vue d'une quantité de dosage aussi faible que possible du matériau thermoconducteur (18) pour le remplissage de la fente respective.

9. Procédé selon l'une quelconque des revendications précédentes, **caractérisé en ce que** les données résultant du mesurage sont utilisées pour vérifier si des tolérances prédéfinies ont été respectées pour la structure de réception (40) et/ou pour le module de batterie (12).

10. Procédé selon l'une quelconque des revendications précédentes, **caractérisé en ce que** les données résultant du mesurage sont utilisées pour déterminer l'usure sur des outils et/ou des demi-produits qui sont utilisés pour la fabrication de la structure de réception (40) et/ou du module de batterie (12).

11. Système (56) permettant de réaliser une interface thermique dans une batterie (10) pour un véhicule automobile, comprenant un dispositif de mesure (48), un dispositif de traitement de données (50), un dispositif de dosage (52) et un dispositif de montage (54) qui sont conçus pour exécuter un procédé selon l'une quelconque des revendications précédentes.

12. Produit de programme informatique qui est conçu pour exécuter, mettre en œuvre et/ou piloter le procédé selon l'une quelconque des revendications 1 à 10.

13. Support de stockage lisible par machine sur lequel est stocké le produit de programme informatique selon la revendication 12.
